# EUROPÄISCHE PATENTSCHRIFT

(11) **EP 1 189 052 B1**
(45) Veröffentlichungstag und Bekanntmachung des Hinweises auf die Patenterteilung: **17.10.2007**
(21) Anmeldenummer: 01810591.6
(22) Anmeldetag: 18.06.2001
(51) Int. Cl.: G01N 21/88

(54) **Vorrichtung zum bildlichen Erfassen von Stückgütern**
Device for image acquisition of piece goods
Dispositif d'acquisition de l'image d'objets

(30) Priorität: 28.06.2000 CH 12802000
(43) Veröffentlichungstag der Anmeldung: 20.03.2002
(73) Patentinhaber: ROBERT BOSCH GMBH, 70442 Stuttgart (DE)
(72) Erfinder: Herre, Erwin, 78345 Moos (DE)
(74) Vertreter: Liebetanz, Michael

(56) Entgegenhaltungen:
- WO-A-00/70360
- US-A- 4 520 702
- US-A- 4 882 498
- US-A- 5 072 127
- US-A- 5 365 084

## Beschreibung

Die Erfindung betrifft eine Vorrichtung zum bildlichen Erfassen von Stückgütern nach dem Oberbegriff des Anspruchs 1.

Eine Vorrichtung ist aus der EP 0 856 465 bekannt, bei der keine spezielle Beleuchtungsvorrichtung genannt ist. Diese Vorgehensweise der Beleuchtung durch das Umgebungslicht weist den Nachteil auf, dass durch Umlichteinflüsse die Aufnahmen der dort beschriebenen Zeilenkameras beeinflusst werden können und somit die Picker nicht genau angesteuert werden.

Ein weiterer Nachteil einer üblichen Beleuchtung liegt in der von den Lichtquellen ausgehenden Wärmestrahlung, die insbesondere bei wärmeempfindlichen Stückgütern wie Nahrungsmitteln, insbesondere bei beispielsweise mit Schokoladen- oder Glasurüberzügen versehenen Stückgütern, zu Qualitätsverlusten führen kann.

Vorrichtungen der eingangs genannten Art sind aus US-A-4 882 488, US-A-5 365 084 und US-A-5 072 127 bekannt.

Ausgehend von diesem Stand der Technik liegt der Erfindung die Aufgabe zugrunde, eine Vorrichtung der eingangs genannten Art zu verbessern, die qualitativ bessere Bildaufnahmen ermöglicht, ohne die Stückgüter thermisch zu belasten.

Diese Aufgabe wird erfindungsgemäss mit den Merkmalen des Anspruches 1 gelöst.

Durch die homogene Beleuchtung der von einem Stückgut eingenommenen Fläche (und von einem Bereich um ein solches Stückgut herum) durch die Lumineszenzdiodenmatrix kann der Erkennungsbereich der Bildaufnahmeinheit hinsichtlich Lagen und Ausrichtungen besser ausgenutzt werden. Der hohe Wirkungsgrad der Lumineszenzdiodenmatrix vermindert den Einfluss von Wärme, die von dem Leuchtkörper ausgeht. Dieser Einfluss kann durch einen Pulsbetrieb der Lumineszenzdiodenmatrix weiter vermindert werden, wobei zusätzlich durch einfarbige LEDs mit einem entsprechend vor der Bildaufnahmeeinheit angeordnetem Farbfilter Streulichteinflüsse noch weiter vermindert werden können.

Entweder werden die Lumineszenzdioden in der Matrix bei einer Anordnung unterhalb eines Transportbandes im Durchlichtbetrieb diffus leuchten, wobei vorteilhafterweise das Transportband die Rolle des Diffusors übernimmt, oder das von den Lumineszenzdioden in der Matrix ausgesandte Licht wird parallel gebündelt, um eine gerichtete Auflichtbeleuchtung zu erzielen.

Wenn, wie oben bereits erwähnt, die Lumineszenzdiodenmatrix während der Aufnahmezeiten (Blende geöffnet) der Bildaufnahmeeinheit gepulste Lichtstrahlen abgibt, kann eine homogene Ausleuchtung der Stückgüter bei geringer Wärmebelastung der Stückgüter erreicht werden. Dadurch kann die Lumineszenzdiodenmatrix näher an die Produkte herangebracht werden und somit die Qualität der Beleuchtung weiter verbessert werden. Gleichzeitig gestattet die kurze Belichtungszeit eine sehr genaue Erfassung der Stückgüter, selbst bei hohen Bandgeschwindigkeiten.

Weitere vorteilhafte Ausführungsformen sind in den Unteransprüchen gekennzeichnet.

Es werden nun eine Reihe von Vorrichtungen im Zusammenhang mit den Zeichnungen näher beschrieben. Es zeigen:
- Fig. 1: eine schematische Draufsicht auf eine Lumineszenzdio-denmatrix ;
- Fig. 2: eine schematische Seitenansicht einer im Durchlichtbetrieb arbeitenden Vorrichtung mit einer unterhalb eines Transportbandes angeordneten Lumineszenzdiodenmatrix,
- Fig. 3: eine schematische Seitenansicht einer im Durchlichtbetrieb arbeitenden Vorrichtung mit einer oberhalb eines Transportbandes angeordneten Lumineszenzdiodenmatrix,
- Fig. 4: eine schematische Seitenansicht einer im Auflichtbetrieb arbeitenden Vorrichtung mit einer seitlich und zugleich schräg oberhalb eines Transportbandes angeordneten Lumineszenzdiodenmatrix,
- Fig. 5: eine schematische Seitenansicht einer im Auflichtbetrieb arbeitenden Vorrichtung mit einer oberhalb eines Transportbandes angeordneten und mit einem Strahlteiler eingespiegelten Lumineszenzdiodenmatrix,
- Fig. 6: eine schematische Seitenansicht einer im kombinierten Auflicht- und Durchlichtbetrieb arbeitenden Vorrichtung mit oberhalb und unterhalb eines Transportbandes angeordneten Lumineszenzdiodenmatrizen gemäss der Erfindung für eine Pickervorrichtung,
- Fig. 7: eine schematische Seitenansicht einer im Durchlichtbetrieb arbeitenden Vorrichtung mit einer unterhalb eines Transportbandes angeordneten Lumineszenzdiodenmatrix für einen Produktspeicher,
- Fig. 8: eine schematische Seitenansicht einer im Durchlichtbetrieb arbeitenden Vorrichtung mit einer unterhalb eines Transportbandes angeordneten Lumineszenzdiodenmatrix für eine Pickervorrichtung, und für eine Pickervorrichtung, und
- Fig. 9: eine schematische Seitenansicht einer im Durchlichtbetrieb arbeitenden Vorrichtung mit einer unterhalb eines Transportbandes und im Arbeitsbereich einer Pickervorrichtung angeordneten Lumineszenzdiodenmatrix.

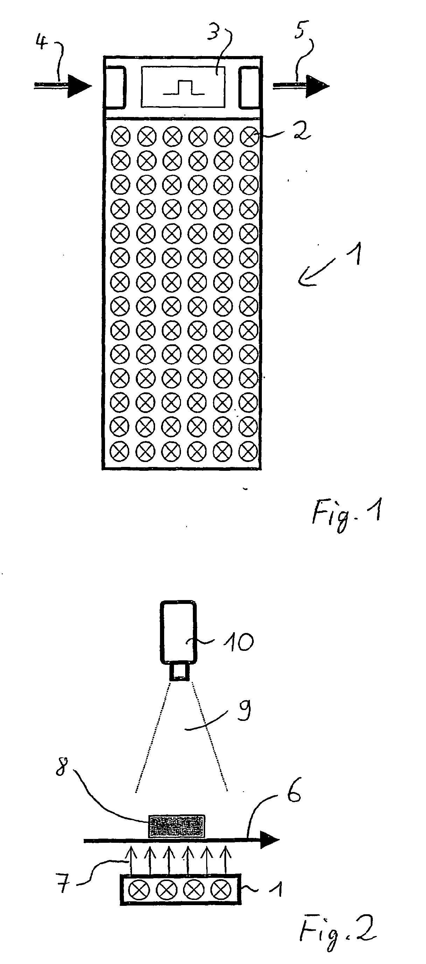

Die Fig. 1 zeigt eine Lumineszenzdiodenmatrix 1 mit einer Vielzahl von Lumineszenzdioden 2, die in Zeilen und Spalten angeordnet sind. Bei einem in den Zeichnungen nicht dargestellten Ausführungsbeispiel sind 12 Spalten und 36 Reihen vorhanden, so dass die Matrix 1 insgesamt 432 im Rechteck angeordnete Lumineszenzdioden 2 umfasst. Diese bilden die Leuchtfläche. Mit dem Bezugszeichen 3 ist die Ansteuerschaltung für die Matrix 1 bezeichnet, die über schematisch angedeutete Steuerimpulse 4 angesteuert wird und die über einen räumlich gegenüber angeordneten Ausgang Steuerimpulse 5 an eine weitere Matrix 1 weiterleiten kann, die unmittelbar an die erste Matrix 1 angesetzt wird, um die Anzahl der Spalten zu erhöhen. Somit können die Matrizen 1 kaskadiert werden.

Diese Kaskadierung ist deshalb von Vorteil, da nur bei der ersten Matrix 1 Steuerimpulse 4 angelegt werden müssen, die von den verschiedenen kaskadierten Matrizen 1 übernommen werden. Diese Steuerpulse umfassen bei einem nicht kontinuierlichen Betrieb der Matrix die Triggerlänge und die Triggerzeit für die Lumineszenzdioden 2. Vorteilhafterweise werden die Lumineszenzdioden 2 im Blitzbetrieb synchron mit jeweils einer Bildaufnahme einer Kamera oder Bildaufnahmeeinheit 10 betrieben. Dabei werden Blitzzeiten von beispielsweise 1 Millisekunde gewählt. Bei einer Bandgeschwindigkeit des Förderbandes 6 von beispielsweise 60 Metern pro Minute beträgt die Unschärfe 1 Millimeter.

Eine Matrix 1 mit Lumineszenzdioden 2 gestattet einen Pulsbetrieb der Lumineszenzdioden mit einer Beleuchtungsdauer von 0,1 ms. Mit einer getrennten Spannungsversorgung der Lumineszenzdioden 2 und der Signale des ansteuernden Rechners werden die Steuersignale durch Optokoppler potentialfrei gehalten. Dabei weisen diese Optokoppler vorzugsweise Grenzfrequenzen von über 100 kHz auf. Ein weiterer Vorteil der LEDs 2 liegt in ihrer einfachen Ansteuerung durch Niedervoltanlagen und die geringe Alterung.

Die oben genannte Matrix 1 mit 432 LEDs weist eine Breite von 100 mm bei einer Länge von 300 mm in Transportrichtung des Förderbandes 6 auf, so dass durch entsprechende Kaskadierung jede Art von Breite eines Förderbandes 6, wie es in den nachfolgenden Fig. dargestellt ist, erreicht werden kann. Mit acht Matrizen 1 lässt sich eine Fläche von 30 Zentimeter Länge bei 80 Zentimeter Breite des Förderbandes 6 ausleuchten.

Vorzugsweise ist eine solche Matrix 1 oder die verbundenen Matrizen 1 in einem Schutzkasten eingesetzt, wobei die Oberseite aus klarem transparentem Material wie beispielsweise Plexiglas ausgeführt ist. Im Folgenden werden die Begriffe Matrix und Matrizenmodul (mit mehreren Matrizen) synonym verwendet und mit den gleichen Bezugszeichen versehen. Weiterhin bezeichnen gleiche Bezugszeichen jeweils gleiche Merkmale. Für die einzelne Matrix 1 als auch für ein Modul gilt gleichermassen, dass es eine flache kompakte Bauweise hat.

In der Fig. 2 ist ein solches Matrizenmodul 1 in der schematischen Seitenansicht unterhalb eines Transportbandes 6 angeordnet dargestellt. Es beleuchtet mit den schematisch angedeuteten parallelen Lichtstrahlen 7 das Transportband 6 von unten, welches als Diffusor wirkt. Das an einem Stückgut 8 vorbeilaufende und somit nicht von diesem reflektierte Licht wird im Erfassungskegel 9 der Bilderfassungseinheit 10 aufgenommen und anschliessend weiterverarbeitet. Die Fig. 2 zeigt dabei eine Durchlichtanordnung mit produktseitiger Kamera. Von Vorteil ist hierbei, dass die LED-Anordnung 1 dicht unter dem Transportband 6 angeordnet werden kann, welches direkt als Diffusor dient. Aufgrund der möglichen nur kurzen Beleuchtungszeiten (Licht-Dunkel-Verhältnis von beispielsweise 1:100; Beleuchtungszeit 0,2 ms alle 20 ms) und der Ausgestaltung der Matrix 1 mit Lumineszenzdioden 2 wird nahezu keine Wärme abgegeben, die ein Gut 8 beschädigen könnte. Darüber hinaus weisen Lumineszenzdioden 2 einen hohen Wirkungsgrad auf. Es ist auch möglich, ein Modul 1 wasserdicht zu gestalten, um entstehende Wärme durch Konvektionskühlung abzuführen.

Die Lumineszenzdioden 2 können jede beliebige Farbe aufweisen, insbesondere also im nahen Infraroten leuchten. Sie können z.B. auch rot, blau, gelb oder grün sein. Dabei ist von Vorteil, wenn alle Dioden 2 gleichfarbig sind. Werden keine weiss leuchtenden Dioden 2 verwendet, sondern beispielsweise identisch rot leuchtende, also monochromatische Dioden 2, so kann vor der Kamera 10 ein Farbfilter für denselben Wellenlängenbereich verwendet werden. Somit werden nur noch Durchlichtbestandteile (in anderen Ausführungsformen Auflichtbestandteile) von der Bildaufnahmeeinheit 10 wahrgenommen, die im wesentlichen von der Matrix 1 stammen. Somit können Umlichteinflüsse (bis auf solche aus dem durchlässigen Frequenzbereich) weiter reduziert werden.

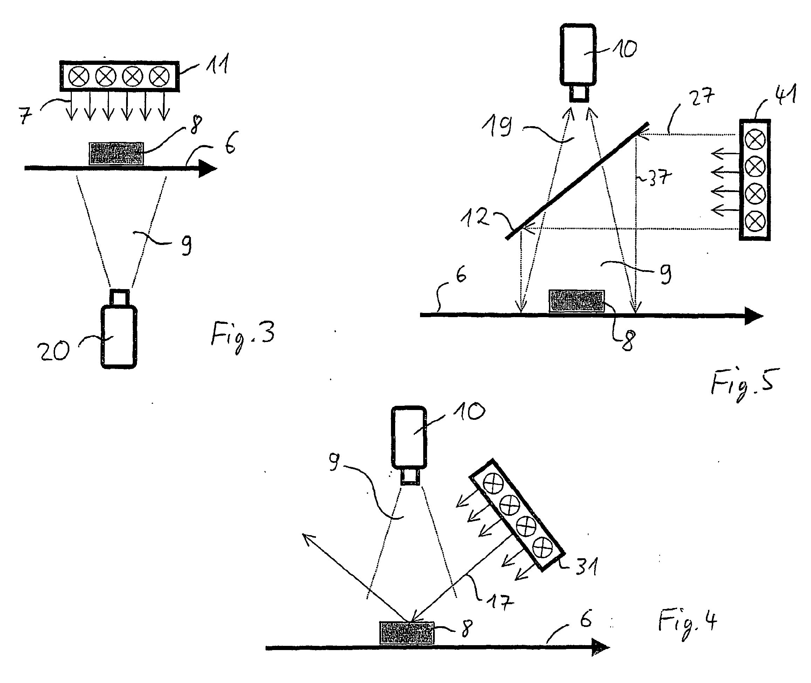

Die Fig. 3 zeigt eine schematische Ansicht einer Durchlichtanordnung mit einer bandseitigen Kamera 20. Deren Erfassungskegel 9 ist auf die rückseitige Oberfläche des Bandes 6 gerichtet und sieht im Durchlicht das Stückgut 8, welches von der gegenüberliegenden Seite mit Hilfe einer Lumineszenzdiodenmatrix 11 angeleuchtet wird.

Die Fig. 4 zeigt eine Vorrichtung mit einer Auflichtanordnung oder Dunkelfeldanordnung. Hierbei ist die Lumineszenzdiodenmatrix 31 schräg über dem durch den Kegel 9 vorgegebenen Erfassungskegel der Kamera 10 angeordnet und beleuchtet mit einem schematisch dargestellten Lichtstrahl 17 das Stückgut 8. Das diffuse Streulicht fällt dann in die Kamera 10 und wird zur Auswertung des Bildsignals herangezogen.

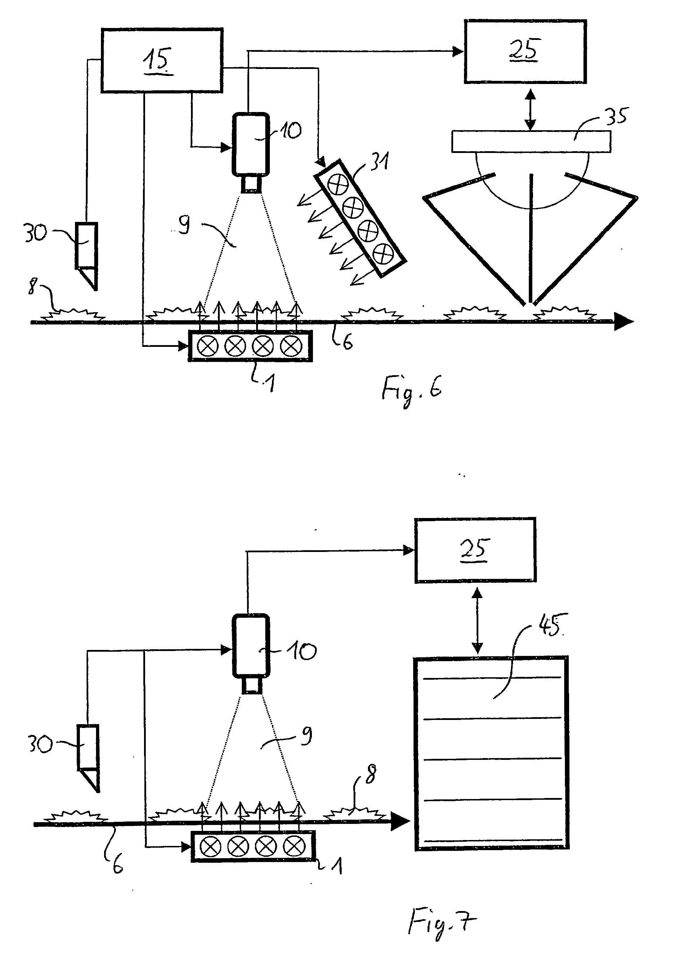

Die Fig. 5 zeigt in schematischer Darstellung eine Auflichtanordnung mit einem Strahlteiler 12, der in einem Winkel von 45° zur Oberfläche des Transportbandes 6 steht. Dies ist die bevorzugte Anordnung, um eine senkrecht zum Transportband 6 stehende Lumineszenzdiodenmatrix 41 einzuspiegeln, d.h. dass die schematisch dargestellten einfallenden Lichtstrahlen 27 von dem Strahlteiler 12 in ein paralleles Strahlenband 37 umgelenkt werden und nach Beaufschlagung von Stückgut 8 und Transportband 6 von dem Erfassungskegel 9 der Kamera 10 aufgenommen werden, wobei allerdings lediglich ein Anteil 19 durch den Strahlteiler 12 hindurchtritt. Der restliche Strahlungsanteil wird auf die Lumineszenzdiodenmatrix 41 zurückgeworfen.

Die Fig. 6 zeigt in schematischer Darstellung eine kombinierte Auflicht- und Durchlichtanordnung gemäss der Erfindung, wobei ein Produktsensor 30 das Eintreten eines Stückgutes 8 feststellt und an eine Regeleinrichtung 15 weitermeldet, die gleichzeitig die Ansteuereinrichtung für die unter dem Transportband 6 angeordnete untere Lumineszenzdiodenmatrix 1 und die schräg oberhalb angeordnete Lumineszenzdiodenmatrix 31 ist. Gleichzeitig nimmt sie die von der Bilderfassungseinheit 10 aus dem Kegel 9 aufgenommenen Bildsignale auf und leitet sie an die Steuereinrichtung 25 der Pickervorrichtung 35 weiter. Diese ist beispielsweise eine mehrarmige Pickervorrichtung gemäss der EP 0 250 470. Dabei wird von der Vorrichtung in zeitlichem Abstand zueinander zuerst ein Durchlichtbild aufgenommen und beispielsweise 16 bis 40 Millisekunden später ein Auflichtbild oder vice versa.

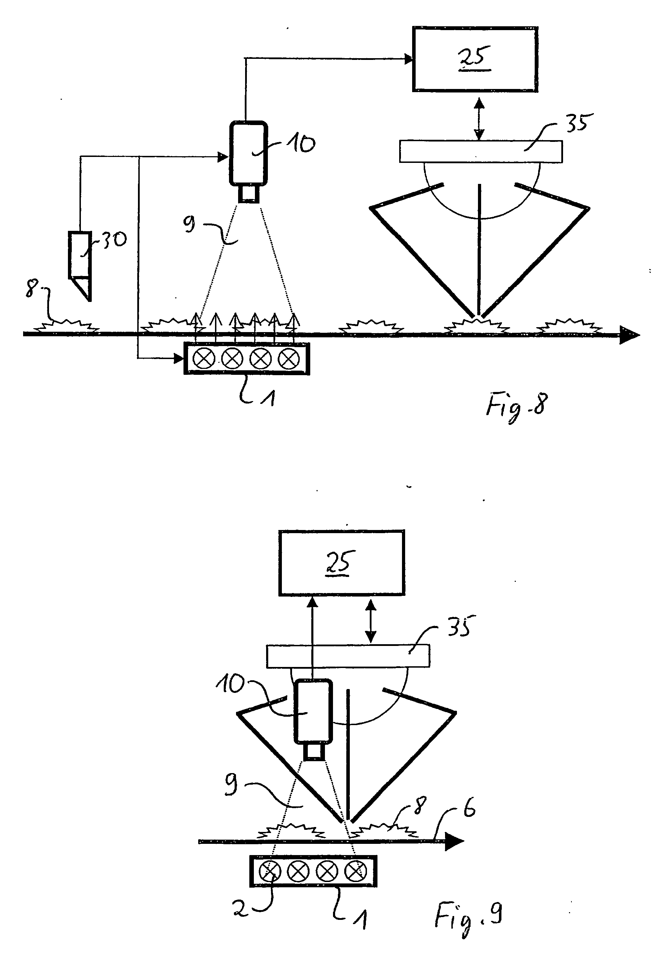

Die Fig. 7 beschreibt eine nicht erfindungsgemässe Anwendung dieser Pickervorrichtung, wobei hier lediglich eine Durchlichtanordnung gewählt worden ist und das von der Kamera 10 aufgenommene Signal in die Steuereinrichtung 25 übermittelt wird, die einen Produktspeicher 45 ansteuert, der die einlaufenden Produkte 8 entsprechend verteilt. Dabei kann es sich bei der Kamera 10 um eine Vorrichtung zur Messung der Position und Dimension der Produkte 8 handeln, die als Zuführsystem zum Speichern oder für Schlauchbeutelmaschinen und ähnliche Anwendungen dient.

Eine synchrone Ansteuerung von Kamera 10 und Beleuchtungsmatrix 1 geschieht durch die in der Fig. 7 nicht dargestellte Systemsteuerung 15.

Die Fig. 8 zeigt eine Vorrichtung, bei der mit einem einfachen Durchlichtverfahren die Pickervorrichtung 35 exakt angesteuert wird. Hier wird im Gegensatz zur Vorrichtung nach Fig. 6 auf Bilder durch einen Auflichtbetrieb verzichtet.

Die Fig. 9 schliesslich zeigt eine Anordnung, bei der die Aufnahmeeinheit 10 im Arbeitsbereich der Pickervorrichtung 35 angeordnet ist. Mit einer in der Steueranordnung 25 geeignet vorgesehenen Logik können entweder die von der Pickervorrichtung 35 ausgehenden Schatten mit mehreren Bildern rechnerisch eliminiert werden oder entsprechende Aufnahmen nur dann vorgenommen werden, wenn kein Bestandteil (Arm, Greifer) der Pickervorrichtung 35 in den auszuwertenden Anteil des Aufnahmekegels 9 hineinsteht. Damit ist der jeweilige Standort der Produkte 8 im Arbeitsbereich direkt und zeitlich unmittelbar vorausbestimmbar. Hiermit ist eine mit hoher Genauigkeit arbeitende Pickervorrichtung 35 mit geringstem Raumaufwand realisierbar. In diesem Falle ist zwischen dem Gehäuse der Lumineszenzdiodeneinheit 1 und dem Transportband 6 vorzugsweise eine transparente Platte, z.B. eine Glasscheibe, eingesetzt, die die Lumineszenzdiodeneinheit 1 vor einer direkten Einwirkung des Pickers und seiner Greifeinrichtung schützt.

Schliesslich ist festzustellen, dass durch eine Kombination von Auflicht- und Durchlichtbeleuchtung mit einem synchronen Blitzbetrieb in kurzen Abständen von typischerweise 16 bis 40 ms die Kontur des zu erfassenden Gegenstandes 8 im Durchlichtbetrieb und zusätzliche Eigenschaften aus dem Auflichtbild gewonnen werden können. Natürlich kann für jede dieser beiden Ansichten auch eine einzelne Kamera eingesetzt werden.

## Patentansprüche

1. Vorrichtung zum bildlichen Erfassen von Stückgütern (8), die geordnet oder ungeordnet auf einem oder mehreren Produktbändern (6) zugeführt werden, mit mindestens einer Beleuchtungseinheit (1, 31, 41) und mit mindestens einer dieser zugeordneten Bildaufnahmeeinheit (10), mit der die auf dem Produktband (6) zugeführten Stückgüter (8) bildlich erfassbar sind, und mit einer Steuereinrichtung (25), mit der die Beleuchtungseinheit (1, 31, 41) und die Bildaufnahmeeinheit (10) ansteuerbar ist, wobei die Beleuchtungseinheit eine Lumineszenzdiodenmatrix (1, 31, 41) ist, die mit der Steuereinrichtung (25) gepulst betreibbar ist, **dadurch gekennzeichnet, dass**
- eine einzelne Aufnahme durch die Bildaufnahmeeinheit (10) und ein zugehöriger Lichtpuls der Lumineszenzdiodenmatrix (1, 31, 41) durch die Steuereinrichtung (25) synchron so schaltbar sind, dass die Lumineszenzdiodenmatrix (1, 31, 41) während der Aufnahmezeiten der Bildaufnahmeeinheit (10) gepulste Lichtstrahlen abgibt,
- eine erste Lumineszenzdiodenmatrix (1) unterhalb und eine zweite Lumineszenzdiodenmatrix (31, 41) oberhalb des Produktbandes (6) angeordnet, das Produktband (6) als Diffusor ausgestaltet und die Bildaufnahmeeinheit (10) für einen Durchlicht- und für einen Auflichtbetrieb oberhalb des Produktbandes (6) angeordnet ist, und
- die Steuereinrichtung (25) die beiden Lumineszenzdiodenmatrizen (1; 31,41) zeitlich kurz nacheinander pulst und die Bildaufnahmeeinheit (10) jeweils synchron dazu ansteuert, um Einzelbilder von Stückgütern (8) im Durchlichtbetrieb und im Auflichtbetrieb zu erzeugen.

2. Vorrichtung nach Anspruch 1, **dadurch gekennzeichnet, dass** die Lumineszenzdiodenmatrix (1, 31, 41) aus monochromatischen LEDs (2) besteht und dass vor der Bildaufnahmeeinheit (10) ein nur den entsprechenden Wellenlängenbereich durchlassender Farbfilter angeordnet ist.

3. Vorrichtung nach Anspruch 1 oder 2, **dadurch gekennzeichnet, dass** ausgangsseitig vor der zweiten Lumineszenzdiodenmatrix (31, 41) ein optisches Element vorgesehen ist, mit dem das ausgesandte Licht parallel (27) gebündelt wird.

4. Vorrichtung nach einem der Ansprüche 1 bis 3, **dadurch gekennzeichnet, dass** das von der zweiten Lumineszenzdiodenmatrix (41) ausgesandte Licht in den Aufnahmekegel (9) der Bildaufnahmeeinheit (10) eingespiegelt wird oder die Bildaufnahmeeinheit (10) mittig in der zweiten Lumineszenzdiodenmatrix (31) eingesetzt ist.

## Claims

1. Device for pictorial acquisition of piece goods (8) which are fed in ordered or unordered fashion on one or more product belts (6), having at least one illuminating unit (1, 31, 41) and having at least one image recording unit (10) which is assigned to the latter and with the aid of which the piece goods (8) fed on the product belt (6) can be acquired pictorially, and having a control device (25) with the aid of which the illuminating unit (1, 31, 41) and the image recording unit (10) can be driven, the illuminating unit being a light-emitting diode matrix (1, 31, 41) which can be operated in a pulsed fashion by the control device (25), **characterized in that**
- a single recording by the image recording unit (10) and an associated light pulse of the light-emitting diode matrix (1, 31, 41) can be switched synchronously by the control device (25) such that the light-emitting diode matrix (1, 31, 41) outputs pulsed light beams during the recording times of the image recording unit (10),
- a first light-emitting diode matrix (1) is arranged below, and a second light-emitting diode matrix (31, 41) is arranged above the product belt (6), the product belt (6) is configured as diffuser and the image recording unit (10) is arranged above the product belt (6) for a transmitted light mode and for a reflected light mode, and
- the control device (25) pulses two light-emitting diode matrices (1; 31, 41) shortly after one another in time and drives the image recording unit (10) synchronously therewith in each case in order to generate individual images of piece goods (8) in transmitted light mode and in reflected light mode.

2. Device according to Claim 1, **characterized in that** the light-emitting diode matrix (1, 31, 41) consists of monochromatic LEDs (2), and **in that** a colour filter passing only the appropriate wavelength region is arranged upstream of the image recording unit (10).

3. Device according to Claim 1 or 2, **characterized in that** provided on the output side upstream of the second light-emitting diode matrix (31, 41) is an optical element with which the light emitted is focussed in parallel (27).

4. Device according to one of Claims 1 to 3, **characterized in that** the light emitted by the second light-emitting diode matrix (41) is reflected into the recording cone (9) of the image recording unit (10), or the image recording unit (10) is inserted into the middle of the second light emitting diode matrix (31).

## Revendications

1. Dispositif d'acquisition d'images d'objets (8) arrivant de manière ordonnée ou non sur une ou plusieurs bandes de production (6), comprenant une unité d'éclairage (1, 31, 41) et au moins une unité de prise de vue (10) associée à celle-ci, qui effectue une prise de vue des produits (8) arrivant sur la bande de production (6) et une installation de commande (25) commandant l'unité d'éclairage (1, 31, 41) et l'unité de prise de vue (10),
l'unité d'éclairage étant une matrice de diodes électro luminescentes (1, 31, 41) commandées de manière pulsée par l'installation de commande (25),
**caractérisé en ce que**
- une unique prise de vue par l'unité de prise de vue (10) et une impulsion lumineuse correspondante de la matrice de diodes électro luminescentes (1, 31, 41) par l'installation de commande (25) sont commutées en synchronisme de façon que la matrice de diodes électro luminescentes (1, 31, 41) émette pendant la durée de prise de vue de l'unité de prise de vue (10), des faisceaux lumineux pulsés;
- une première matrice de diodes électroluminescentes (10) étant installée en dessous de la bande de production (6) et une seconde matrice de diodes électro luminescentes (31, 41) étant installée au dessus de cette bande de production (6) réalisée comme diffuseur et l'unité de prise de vue (10) est installée pour un éclairage par transparence et pour l'éclairage par réflexion au dessus de la bande de production (6) ; et
- l'installation de commande (25) commande de manière pulsée avec un court intervalle, l'une après l'autre les deux matrices de diodes électro luminescentes (1, 31, 41) et l'unité de prise de vue (10) est chaque fois commandée en synchronisme pour prendre des images séparées des produits (8) en mode par transparence et en mode par réflexion.

2. Dispositif selon la revendication 1,
**caractérisé en ce que**
la matrice de diodes électro luminescentes (1, 31, 41) est formée de diodes LED monochromatiques (2) et un filtre couleur, transparent seulement à la plage des longueurs d'ondes correspondantes est installé devant l'unité de prise de vue (10).

3. Dispositif selon la revendication 1 ou 2,
**caractérisé par**
un élément optique prévu en sortie devant la seconde matrice de diodes électro luminescente (31, 41) qui forme un faisceau parallèle de lumière émise (27).

4. Dispositif selon l'une des revendications 1 à 3,
**caractérisé en ce que**
la lumière émise par la seconde matrice de diodes électro luminescentes (41) est renvoyée par miroir dans le cône de prise de vue (9) de l'unité de prise de vue (10) ou l'unité de prise de vue (10) est installé en position centrale dans la seconde matrice de diodes électro luminescentes (31).
